# DEMANDE DE BREVET EUROPEEN

(11) **EP 1 560 103 A1**
(43) Date de publication de la demande: **03.08.2005**
(21) Numéro de dépôt: 04100332.8
(22) Date de dépôt: 29.01.2004
(51) Int. Cl.: G06F 3/033, B41M 5/00, D21H 21/52, D21H 19/84

(54) **Papier couché, imprimable en jet d'encre sur une face et anti-glisse sur l'autre**

(71) Demandeur: CGP Industries, 63270 Parent (FR)
(72) Inventeur: HONNORAT, André, 74000, ANNECY (FR)
(74) Mandataire: Vuillermoz, Bruno

(57) **Abrégé**

L'invention a pour objet un papier couché **(I)** constitué d'un support papier **(1)** couché différemment sur ses deux faces **(1a, 1b)** opposées, et caractérisé en ce que :
- la face recto **(1a)** du support **(1)** est associée à une couche **(2)** imprimable par jet d'encre avec une qualité photographique, et
- sa face verso (**1b**) est associée à une couche (**3**) non-adhésive, à fonction anti-glisse, comportant des microbilles déformables dispersées dans un liant.
ainsi qu'un procédé de préparation d'un tel papier et l'utilisation d'un tel papier notamment pour la fabrication d'un tapis de souris d'ordinateur.

## Description

L'invention concerne le domaine technique du papier. Plus particulièrement, l'objet de l'invention concerne un papier couché sur ses deux faces avec deux couches de fonctionnalités et de natures différentes, l'une de ces couches présentant des propriétés anti-glisse, l'autre étant imprimable par jet d'encre pour donner une impression de qualité photographique. L'invention a également pour objet un procédé de préparation d'un tel papier, ainsi que l'utilisation d'un tel papier notamment pour la fabrication d'un tapis de souris d'ordinateur.

Une des applications préférées du papier selon l'invention est la réalisation de tapis de souris. Les pointeurs d'ordinateurs communément appelés "souris" sont des dispositifs dont le déplacement sur un tapis permet de désigner, à l'aide d'un curseur, une zone sur un écran de visualisation d'ordinateur. Le tapis est posé sur une table ou plan de travail. De telles souris sont connues depuis de nombreuses années sous diverses formes, dont les principales possèdent un dispositif de positionnement à boule ou optique. Les souris disposent dans tous les cas de patins pour leur glissement sur la surface du tapis, usuellement au nombre de quatre.

Les fonctionnalités dont doit disposer le tapis de souris sont : d'assurer un déplacement aisé de la souris à sa surface tout en garantissant l'efficacité du pointage par le système à boule ou optique, d'assurer un bon maintien sur le plan de travail de manière à ce qu'un déplacement de la main guidant la souris n'entraîne pas un déplacement de l'ensemble souris - tapis, mais seulement de la souris. De façon optionnelle la texture du tapis a de l'importance pour la sensation qu'elle engendre au contact de la main de l'utilisateur. Une impression à sa surface est systématiquement présente, pour des raisons publicitaires ou d'agrément.

Les tapis de souris sur le marché disposent de caractéristiques communes : ils sont constitués de plusieurs feuillets de matériaux différents pour assurer d'une part l'adhésion du tapis au plan de travail et d'autre part le glissement de la souris sur la surface du tapis avec laquelle elle est en contact.

Pour éviter le glissement du tapis sur le plan de travail, lors de la manipulation d'une souris disposée à sa surface, des mousses sont majoritairement utilisées. Des exemples de fabrications de tels produits sont fournis par les brevet US 5 788 203, NITTI et GB 2 289 520, HIGGS. Par ailleurs, des revêtements adhésifs repositionnables ont également été décrits. Une autre manière d'empêcher le glissement est aussi d'employer comme tapis un bloc rigide de poids notable et de rugosité élevée sur sa face en contact avec le plan de travail.

La face du tapis sur laquelle glisse la souris est généralement en plastique ou recouverte d'un vernis, comme cité dans le brevet FR 2 716 736 de la société DUPONT. Cette face est souvent recouverte d'un revêtement superficiel finement texturé, de manière à ce que la boule du pointeur puisse accrocher et assurer sa fonction de roulement. Par ailleurs, cette face du tapis étant visible lors de son utilisation, elle est usuellement imprimée en sérigraphie.

D'autres systèmes faisant appel à des papiers ont été décrits, il s'agit notamment d'utiliser des blocs de feuilles collées par les côtés et détachables, tels que décrits dans le brevet US 6 322 033 de la société GIRAFFICS ou des ensembles de feuilles fixées par le dessous avec des adhésifs repositionnables de type "post-it" tels qu'indiqués dans le brevet FR 2 685 112, CARAT. Les surfaces de ces feuilles de papier sont quelconques.

Pour résumer, la technique actuelle de fabrication des tapis de souris fait appel à l'assemblage sophistiqué de matériaux complexes, usuellement en plastique ou plastique et papier, réalisés en plusieurs étapes différentes et imprimés en série.

De plus, les tapis actuels majoritairement commercialisés disposent d'une surface en contact avec la souris, et donc également avec la main de l'utilisateur, en plastique, de contact froid ou/et peu agréable au toucher, même si certaines améliorations ont été amenées par des textures plus favorables.

Dans ce contexte, l'un des objectifs de la présente invention est de fournir, en un nombre réduit d'opérations et à un faible coût de revient, un produit adapté à la fabrication de tapis de souris, mais également de sets de tables personnalisés pouvant servir pour les plateaux repas dans les avions, de nappes, de sous-mains ou d'autres produits similaires, ce produit comportant :
- une première face, dite verso, destinée à être en contact avec un plan de travail et présentant des propriétés anti-glisses et autorisant un positionnement aisé sur ledit plan de travail,
- une deuxième face, dite recto, destinée à recevoir une inscription.

Mais surtout, l'inventeur a eu le mérite de mettre en évidence qu'il existait un besoin de disposer d'un produit, pour la fabrication de tapis de souris notamment, qui soit doté des fonctionnalités ci-dessus mentionnées et qui offre, en plus, aux utilisateurs la possibilité de personnaliser leur tapis de souris selon leur souhait.

Dans ce contexte, l'invention propose un papier couché constitué d'un support papier couché différemment sur ses deux faces opposées, et caractérisé en ce que :
- la face recto du support est associée à une couche imprimable par jet d'encre avec une qualité photographique, et
- sa face verso est associée à une couche non-adhésive, à fonction anti-glisse, comportant des microbilles déformables dispersées dans un liant.

La face recto du papier peut donc subir une personnalisation aisée par l'utilisateur d'une imprimante jet d'encre couplée avec un ordinateur, comme on peut en trouver dans tous les bureaux et chez de nombreux particuliers. Le papier selon l'invention se prête aisément à des découpes à façon. De plus, la face recto traitée du papier suivant l'invention présente une surface plus agréable au toucher que les plastiques.

La présente invention a également pour objet un procédé de fabrication d'un papier couché précédemment décrit comprenant les étapes suivantes :
a) on couche sur la face recto du support une couche imprimable par jet d'encre avec une qualité photographique, et
b) on couche sur la face verso du support une couche non-adhésive, à fonction anti-glisse, comportant des microbilles déformables dispersées dans un liant.

Un autre objet de l'invention est l'utilisation d'un papier couché décrit ci-dessus pour la réalisation de nappes, sets de tables, sous-mains ou de préférence tapis de souris.

Les tapis de souris réalisés à partir d'un tel papier couché font également partie intégrante de l'invention.

Diverses autres caractéristiques ressortent de la description faite ci-dessous en référence au dessin annexé qui montre, à titre d'exemple non limitatif, des formes de réalisation de l'objet de l'invention.

La **figure unique** est une vue schématique en perspective d'un papier **I** selon l'invention. Le papier **I** selon l'invention, tel qu'illustré à la **figure unique**, comporte un support **1** en papier en forme générale de feuille, couché différemment sur chacune de ses grandes faces, sa face **1a** étant nommée face recto et sa face **1b** étant nommée face verso. Par « couché sur une de ses faces », on entend que la face du papier est associée à une couche venant recouvrir sa surface suivant une technique connue dans le domaine du papier et de la transformation des papiers. La face recto **1a** du support papier est associée à une couche **2** imprimable en jet d'encre avec une qualité photographique, nommée par la suite couche jet d'encre **2,** et sa face verso **1b** est associée à une couche **3** non-adhésive, à fonction anti-glisse, nommée par la suite couche anti-glisse **2**.

Les épaisseurs des couches **2** et **3** et du papier **1** sont volontairement représentés à plus grande échelle, pour faciliter la compréhension de l'invention. Les couches **2** et **3**, sont étroitement intriquées avec le support 1 en papier. En fait, les couches **2** et **3** pénètrent partiellement dans l'épaisseur du support **1** dont elles ne peuvent plus être séparées.

Le support **1** en papier utilisé peut être quelconque notamment en ce qui concerne son niveau de blancheur, sa couleur, son état de surface et ses principales caractéristiques. Notamment, tout type de papier cellulosique pourra être utilisé.

De préférence, le support papier **1** disposera des propriétés suivantes : sa porosité ne sera pas très élevée de manière à ce que les couches déposées sur les deux faces soient les plus fines possible, le papier sera assez "bouffant", c'est à dire qu'il possédera une épaisseur élevée relativement à son poids, la cohésion de surface sera aussi grande que possible et enfin, de préférence, l'état de surface sera réglé de manière différente sur les deux faces du papier. Il est en effet préférable que la face verso **1b** destinée à être couchée avec la couche anti-glisse **3** soit la plus lisse possible et la face recto **1a** destinée à être couchée avec la couche jet d'encre **2** dispose d'une texturation ou d'une rugosité plus marquée, de telle manière que, dans l'application tapis de souris, tous les types de souris puissent être employés. Ainsi, de préférence, la face verso **1b** du support papier, aura un lissé mesuré suivant la méthode Bekk classiquement connue en papeterie, Norme AFNOR NF Q 03 012, d'au moins 20 secondes et de préférence de plus de 40 secondes. La face recto **1a** sera avantageusement plus rugueuse pour améliorer la sensation de toucher et pour un bon usage de tous les types de souris, dans l'application tapis de souris.

Pour renforcer la sensation agréable de la surface du papier **I** selon l'invention, il est également envisageable d'utiliser un support **1** fabriqué avec une composition fibreuse contenant, pour tout ou partie, des linters de coton dont le toucher est beaucoup plus doux que celui d'une composition cellulosique standard. Dans le même but, il peut également être amené dans la composition fibreuse une proportion notable de fibres synthétiques telles que par exemple celles de polyester.

La face recto **1a** du support papier 1 pourra également être texturée. Cette texturation sera alors conservée sur le papier couché obtenu, même après impression par jet d'encre.

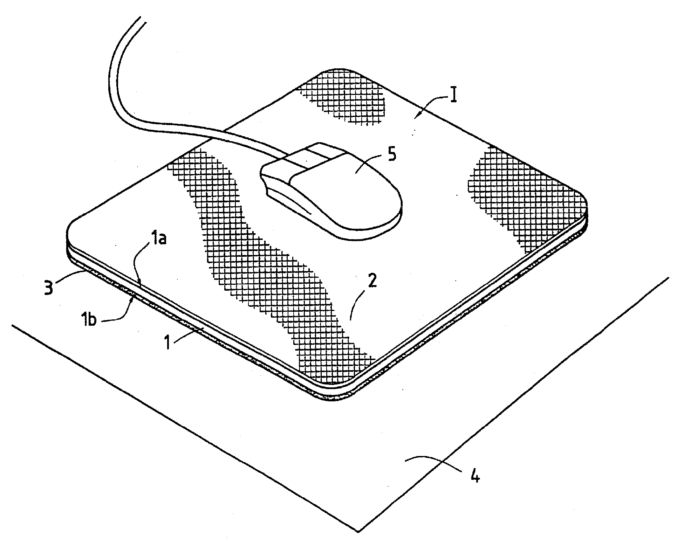

La couche jet d'encre **2** associée à la face recto **1a** du support **1,** destinée à être personnalisée par impression jet d'encre, est spécifique pour une impression de qualité photographique. En effet, il se trouve une très grande différence qualitative entre un papier "ordinaire" et un papier couché spécifiquement pour l'impression de photos. Au sens de l'invention, on entendra par couche imprimable en jet d'encre avec une qualité photographique, une couche permettant d'obtenir une impression couleur, avec une imprimante couleur jet d'encre réglée en qualité photographique, caractérisée par un rendu moyen colorimétrique élevé. A titre indicatif, pour une impression avec une imprimante EPSON STYLUS PHOTO 750 dans la configuration d'impression suivante :
- option du papier : papier jet d'encre de qualité photo,
- option paramètres de qualité : optimale - suivant les systèmes d'exploitation d'autres configurations sont accessibles : retenir la configuration automatique de base disponible après la sélection de la qualité du papier,
- option couleur,
sera considéré comme imprimable en jet d'encre avec qualité photographique, un papier couché dont l'impression obtenue sur sa face couchée dans les conditions ci-dessus définies sera caractérisée par une densité colorimétrique mesurée avec un densitomètre GRETAG MACBETH 186 ®, correspondant à la moyenne arithmétique des 3 densités optiques des couleurs mesurées sur une mire réalisée avec des aplats formés de couleurs pures : 100% de cyan - 100% de magenta - 100% de jaune, supérieure ou égale à 0,90 et de préférence supérieure ou égale à 0,95.

La couche jet d'encre **2** contient certains constituants classiquement utilisés pour une telle application, à savoir imprimable en jet d'encre avec qualité photographique. Classiquement, une telle couche contient principalement des particules de silice dispersées dans un liant polymérique et également, de façon avantageuse, de l'alcool polyvinylique (PVA) et des agents cationiques permettant la floculation des encres. Les particules de silice ont le pouvoir d'absorber les encres. Pour plus de précisions sur la nature et les quantité de constituants pouvant être utilisés dans la couche jet d'encre **2**, on pourra, notamment, se référer à la demande de brevet EP 1 122 085 et au brevet US 5,759,673.

Selon l'invention, cette couche jet d'encre 2 utilisée pour la fabrication du papier contient de préférence plusieurs additifs importants, seuls ou en mélange :
- des agents espaceurs, notamment des microbilles qui n'absorbent pas les encres et sont de diamètre moyen élevé, typiquement compris entre 10 et 50 µm, pour réaliser un espacement entre l'essentiel de la couche jet d'encre et les pics constitués par les microbilles. Ainsi, notamment lors du passage de la souris sur la couche **2** imprimée, quand le papier selon l'invention est utilisé en tant que tapis de souris, la couche **2** imprimée est partiellement protégée par les billes de tailles importantes et la souris glisse aisément à sa surface. Le toucher de la couche **2** est également plus doux. Les microbilles peuvent être de nature très variée dans la mesure où elles sont compatibles avec les autres constituants de la couche jet d'encre **2** et n'interfèrent pas ou peu sur la qualité d'impression. Les microbilles peuvent être rigides ou déformables, mais de préférence il sera utilisé des microbilles rigides. Avantageusement, la couche jet d'encre **2** contient une quantité de microbilles inférieure à 4 g/m², de préférence comprise entre 0,2 et 1,5 g/m². De telles microbilles sont par exemple des microbilles de verre, de polyéthylène ou de polypropylène micronisé, des billes de polymères de polyuréthane ou des composés contenant du fluor ...
- des agents de renforcement de la cohésion de la couche, notamment pour améliorer la résistance à la rayure, à l'abrasion de la surface, lors du passage de la souris notamment, quand le papier selon l'invention est utilisé en tant que tapis de souris. De tels agents peuvent être de nature très diverse et sont notamment des polymères de polyuréthane ou des résines uréthane - acryliques, des agents de réticulation des liants ...
- des additifs qui rendent la surface douce au toucher, notamment l'utilisation en combinaison avec la silice d'une charge du type MARTIFIN® de la société MARTINSWERKE, de cires ou des agents tensio-actifs...

Le but de tous ces additifs est d'amener à la couche une résistance améliorée vis à vis de l'abrasion provoquée par les déplacements répétés de la souris, de faciliter le glissement de celle-ci et rendre le déplacement du pointeur très précis tout en améliorant le toucher du couchage pour le rendre doux et agréable.

La quantité de couche jet d'encre **2** sèche déposée sur la face recto **1a** du support **1** dépend de la nature du support utilisé et notamment de son lissé et de sa porosité, de l'efficacité des constituants de la couche **2**, de la présence d'adjuvants divers, ainsi que du rendu d'impression souhaité, notamment en ce qui concerne les densités optiques des couleurs et la définition des images. Typiquement, la couche jet d'encre **2** est déposée selon une masse surfacique inférieure ou égale à 20 g de matière sèche par m² de face recto **1a** du support. De préférence, la couche jet d'encre **2** est aussi fine que possible et présente avantageusement une masse surfacique en sec comprise entre 4 et 10 g/m², pour maintenir la texture de la face recto **1a** du support **1.**

Le support **I** est recouvert sur sa couche verso **1b** par une couche anti-glisse **3**. La couche anti-glisse **3**, non-adhésive, est destinée à limiter le glissement du papier sur un plan de travail **4** lors des applications envisagées. En particulier, pour l'utilisation préférée du papier **I** selon l'invention comme tapis de souris, le tapis de souris est déposé sur le plan de travail **4**, face verso **1b** recouverte par la couche anti-glisse **3** contre la plan de travail, de façon à limiter le glissement du tapis de souris sur le plan de travail lors du déplacement de la souris **5** sur la couche jet d'encre **2** de la face recto **1a,** comme illustré à la **figure unique.** La couche anti-glisse **3** est essentiellement composée de microbilles déformables sous l'action de la pression et d'un liant. Les microbilles déformables, de forme générale sphérique, présentent, de préférence, un diamètre moyen inférieur ou égal à 100 µm, préférentiellement compris entre 10 et 80 µm. La nature des polymères constitutifs des microbilles n'est pas un point caractéristique, seul l'effet de déformation de la couche sous l'action de la pression est recherché.

Les microbilles déformables classiquement utilisées sont généralement constituées par des sphères creuses de polymères thermoplastiques contenant un ou plusieurs agents d'expansion liquides ou volatils qui produisent une expansion des billes au moment du séchage de la couche sous l'effet de la température. Des sphères déjà expansées peuvent également être directement utilisées. De façon préférée, des microsphères thermoplastiques contenant un liquide, tel que l'isobutane ou l'isopentane, seront utilisées. En particulier, l'enveloppe thermoplastique de ces microsphères sera à base de copolymères de chlorure de vinylidène et d'acrylonitrile ou d'acrylonitrile et de nitrile métacrylique. Plusieurs sociétés commercialisent des microbilles déformables, les plus connues sont les références EXPANCEL® de la société AKZO NOBEL. De préférence, ces microsphères sont des microsphères expansées à une température comprise entre 70°C et 200°C et plus préférentiellement pour les microsphères EXPANCEL® 820 DU 40 entre 75°C et 125°C et de préférence 100°C. Cette température est la température à laquelle doit être portée la surface du papier pour transformer le liquide contenu dans les microsphères en gaz et provoquer l'expansion des microsphères.

Le liant est généralement composé d'un ou plusieurs polymères présentant de préférence une température de transition vitreuse inférieure à 25°C et de préférence inférieure à 15°C, par exemple de type polymères naturels ou "latex".

En particulier, la couche anti-glisse **3** contient de 0,5 % à 25 % en poids sec de microsphères thermoplastiques et de 75 % à 99,5 % en poids sec de liant.

Avantageusement, la couche anti-glisse **3** contient également un agent régulateur de viscosité, typiquement de la CMC, du PVA ou de l'amidon, un ou plusieurs agents régulateurs de tension-superficielle et un ou plusieurs additifs permettant l'ajustement du pouvoir compressible du couchage, notamment des plastifiants, des réticulants... La couche anti-glisse **3** n'est pas adhésive vis à vis des surfaces avec lesquelles elle peut être mise en contact ; c'est-à-dire que la couche anti-glisse **3** n'est pas "collante" à température ambiante notamment. L'effet anti-glisse ou anti-dérapant est obtenu par la déformation des microbilles déformables sous l'effet de la pression.

Pour une face **1b** présentant un lissé selon la méthode Bekk précédemment mentionné d'au moins 20 secondes, la masse surfacique sèche de microbilles sera inférieure ou égale à 5 g/m², de préférence comprise entre 0,5 et 3 g/m². Si la face **1b** est plus rugueuse, la couche anti-glisse **3** contiendra une quantité de microbilles plus importante.

La régulation de la fonction anti-glisse est effectuée de différentes façons, séparées ou en combinaisons : par la quantité de couche déposée, plus la quantité est élevée plus le pouvoir anti-glisse est fort, par la nature des microbilles utilisées, notamment en ce qui concerne la taille de celles-ci et la température d'expansion, lorsque celles-ci sont expansées au séchage de la couche, par la quantité de microbilles utilisées dans la formulation, par l'adjonction de produits glissants antagonistes de type charges minérales, enfin, et non limitativement, par la température de transition vitreuse du latex qui produit une couche plus ou moins rigide.

Du fait de son caractère non-adhésif, la face anti-glisse **3** du papier **I** selon l'invention ne colle pas aux surfaces (plan de travail, autres papiers, chargeur d'imprimante) sur lesquelles elle peut être déposée et est également compatible pour le passage du papier selon l'invention en imprimante jet d'encre.

De façon avantageuse, la masse sèche surfacique déposée de cette couche anti-glisse **3** sur la face verso **1b** du support papier est inférieure ou égale à 25 g/m² et plus particulièrement comprise entre 7 et 15 g/m² pour une surface de support assez lisse. Il est bien évident que les améliorations qui peuvent être obtenues avec des microbilles plus performantes ou l'utilisation d'un support très lisse ou très fermé, peuvent permettre de diminuer la quantité de couche déposée sans sortir du cadre de l'invention, ce qui est économiquement souhaitable.

L'aptitude au bon passage du papier ainsi revêtu de ces deux couches dans les imprimantes jet d'encre est obtenu par l'ajustement de différents paramètres mentionnés précédemment dont les principaux sont la différence de rugosité entre les deux couches, dont une partie a pour origine les lissés des deux faces du support, les quantités des couches déposées, la taille des microbilles présentes sur les faces.

De façon particulièrement préférée, la face verso **1b** couchée avec la couche anti-glisse **3** est macroscopiquement lisse (à l'échelle du mm au cm) mais microscopiquement rugueuse (du fait de l'expansion des microbilles, à l'échelle 10 à 80 µ), en revanche la face recto **1a** couchée avec la couche jet d'encre **2** est préférentiellement rugueuse, microscopiquement et macroscopiquement.

Avantageusement et ce pour faciliter le passage du papier selon l'invention dans les imprimantes de bureau, le grammage final du papier **I** selon l'invention ne sera pas trop élevé. De préférence, ce grammage sera inférieur ou égal à 400 g/m², de préférence compris entre 80 et 250 g/m², pour être utilisé dans tous les types d'imprimantes et notamment celles à retournement de feuilles de la marque Hewlett-Packard.

La présente invention a également pour objet un procédé de fabrication du papier **I** défini ci-dessus. Ce procédé comprend les étapes suivantes :
a) on couche sur la face recto **1a** du support 1 une couche **2** imprimable par jet d'encre avec une qualité photographique, et
b) on couche sur la face verso **1b** du support **1** une couche **3** non-adhésive, à fonction anti-glisse, comportant des microbilles déformables dispersées dans un liant.

L'application de la couche jet d'encre **2** et de la couche anti-glisse **3** peut se faire par tout moyen de couchage connu en papeterie. Le couchage de ces deux couches peut se faire au cours du même passage en coucheuse au moyen de deux postes d'enduction différents situés dans la machine, ou en deux passages machine pour les coucheuses ne disposant que d'un poste d'enduction, par exemple en utilisant des coucheuses à lames d'air appropriées.

Le procédé employé consiste à dérouler un support papier sous forme de bobine sur un poste de déroulage, le papier entraîné atteint un premier poste d'enduction ; une des deux faces du papier arrive au contact d'un rouleau enducteur destiné à apporter la composition de couchage liquide en milieu aqueux (à un extrait sec variable de 8 à 20 % dans le cas d'une lame d'air) sur le papier en une dépose très épaisse, puis par le moyen d'une barre égalisatrice et/ou d'un dispositif à lame d'air (lequel consiste à souffler sous forte pression de l'air sur le papier afin d'essuyer la surface et limiter la quantité de couche appliquée) à ajuster la dépose ; dans l'étape suivante le papier est séché dans des fours à air pulsé puis bobiné ou enduit à nouveau sur l'autre face suivant un cycle identique au précédent.

Dans une variante de réalisation de l'invention, il est tout à fait envisageable de contrecoller deux supports papier disposant chacun d'une des deux surfaces fonctionnelles nécessaires pour obtenir un produit équivalent à celui précédemment décrit, c'est à dire d'assembler par collage sur une contrecolleuse un papier anti-glisse adapté pour l'application et un papier couché jet d'encre de qualité photographique et pouvant disposer des spécificités nécessaires. Un tel papier aurait les mêmes avantages mais serait plus coûteux à produire puisque les deux papiers seraient fabriqués et couchés séparément puis assemblés dans une étape ultérieure avec de grands risques de dégradation des surfaces, de la couche jet d'encre notamment. Une telle opération de transformation n'est pas exclue, bien que moins intéressante, et entre dans le cadre de la présente invention.

La présente invention a également pour objet l'utilisation d'un papier **I** ci-dessus défini pour la réalisation de sets de tables, nappes, sous-mains et en particulier de tapis de souris. Les tapis de souris ainsi obtenus font partie intégrante de l'invention.

Ces tapis de souris peuvent être personnalisés après impression à l'aide d'une imprimante jet d'encre et éventuellement découpe d'un papier couché **I** précédemment décrit.

Les avantages de l'invention sont nombreux, tant d'un point de vue économique, puisque le coût d'un papier couché est sans commune mesure avec celui d'un plastique complexé usuellement utilisé pour la fabrication de tapis de souris, que d'un point de vue technique, puisque l'impression du tapis de souris est personnalisable à l'unité, ce qui est impossible pour les autres tapis existants sur le marché. Le tapis imprimé au format A4 standard sur les imprimantes de bureau peut être découpé à la forme souhaitée et disposer d'une surface de travail suffisante pour assurer sa fonction. Enfin, la texture de surface du papier est plus agréable que celle d'un plastique et les grains disponibles sont plus variés ce qui donne une plus grande diversité encore dans la personnalisation du produit. Il est envisageable de coucher des papiers supports contenant du coton et dont le toucher est très doux avec des texturations diverses réalisées soit sur machine à papier à l'aide de feutres marqueurs, de presses gravées ou d'autres systèmes connus, soit hors machine par la technique classique d'embossage, dans le but d'obtenir des surfaces en contact avec la souris très finement texturées, très agréables au toucher, tout en ajoutant à l'impression personnalisée de qualité photographique un effet de relief particulier.

Les exemples ci-après illustrent l'invention mais n'ont nullement un caractère limitatif.

### EXEMPLE 1 :

Un papier personnalisable par une impression jet d'encre et disposant d'une face anti-glisse au verso est réalisé de la façon suivante :

Un papier servant de support, de grammage 108 g/m², de lissé Bekk 30 secondes sur la face dite recto et 60 secondes sur la face verso, est enduit hors machine à papier dans une coucheuse de type lame d'air disposant de deux postes d'enduction sur ses deux faces et en un seul passage avec deux couches différentes.

La face verso, la plus lisse, reçoit une dépose de 15 g/m² en poids sec d'une formulation contenant en pourcentage : 75% d'un liant styrène-butadiène carboxylé de transition vitreuse de 15°C, 17%. de microbilles déformables EXPANCEL® 820 DU 40 de 40 µm de diamètre moyen de la société AKZO NOBEL et 8% d'un agent épaississant : un alcool polyvinylique de haute viscosité.

La température de séchage de cette couche est spécifiquement adaptée pour l'expansion maximum des billes de manière à ce que la rugosité finale de cette face du papier soit très importante et que sous l'action de la pression la surface soit déformable pour atteindre l'effet non glissant recherché. La température de surface atteinte par le papier en sécherie est de 110°C.

La face recto, la plus rugueuse, reçoit une dépose de 7 g/m² en poids sec d'une formulation contenant en pourcentage : 60% de silice, 25% de PVA , 5% d'un agent cationique pour la floculation des encres, 5% d'additifs divers comprenant des agents pour la dispersion de la silice, des agents antimousses, des agents d'étalement, des insolubilisants des liants et 5% de microbilles de polyuréthane DAIPLACOAT® RHC 530 CLEAR de la société DAINICHISEIKA COLOR & CHEMICALS dont le diamètre moyen de particules est de l'ordre de 12 à 17 µm.

Après les couchages et le développement de l'expansion des microbilles du couchage verso, la face verso la plus lisse du support devient la plus rugueuse et la face recto la plus lisse ; en final le papier obtenu **I** est globalement très rugueux sur ses deux faces mais une différence importante existe entre la face à imprimer et l'autre. Du fait de la couche jet d'encre définie précédemment, le toucher de la surface est beaucoup plus doux que celui d'un papier jet d'encre habituel.

Ainsi l'épaisseur « typique » d'un papier support 1 suivant l'exemple 1 est de 125 µm environ, la couche **2** du même exemple 1 de 7 g/m² peut être considérée à environ 7 µm alors que la couche **3**, de 15 g/m² à environ 15 µm hors microsphères, celles-ci engendrant localement des surépaisseurs de l'ordre de 40 µm. Ces deux couches pénètrent dans le support sur une épaisseur variable suivant les supports mais qui peut être considérée dans le présent exemple 1 à environ 3 µm sur chaque face. En final l'épaisseur du papier de l'exemple 1 se situerait à environ 140 µm pour 130 g/m² avec localement, sur les microsphères, des épaisseurs supplémentaires de l'ordre de 40 µm soit environ 169 µm.

Dans ce cas précis, en dehors des microsphères, le support représente 88 % de l'épaisseur totale, la couche recto **2** 3 % (environ 4 µm hors support et 3 µm à l'intérieur du support) et la couche verso **3** 9 % (environ 12 µm hors support et 3 µm à l'intérieur). Si on prend en compte les microbilles expansées les proportions sont différentes : support 125 µm = 74 %, couche **2** : 4 µm = 2 %, couche **3** : 40 µm = 24 %.

Le papier ainsi traité a un grammage final de 130 g/m². Après introduction de plusieurs feuilles dans la cassette d'alimentation des imprimantes jet d'encre et des essais d'impressions il est constaté que le passage s'effectue sans départ multiple de feuilles et donc sans bourrage malgré la présence de la couche anti-glisse au verso de la face imprimée. L'impression en jet d'encre sur une imprimante EPSON STYLUS PHOTO 750 avec un réglage adapté pour les papiers couchés de qualité photographique conduit à d'aussi bons résultats que sur des papiers couchés habituellement rencontrés sur le marché. L'emploi pendant une longue période de ce papier comme tapis de souris permet de constater une amélioration de la résistance de l'impression vis à vis de l'usure provoquée par les patins de la souris comparativement à la longévité d'une impression sur un papier couché standard et par rapport à un papier couché ne contenant pas les microbilles.

Le papier ainsi obtenu possède une image de haute qualité, un toucher très doux. Le glissement de la souris d'ordinateur, lorsque le papier est utilisé comme tapis de souris, s'effectue sans problème, le pointage étant très précis. Lors de l'emploi en tant que tapis de souris d'une feuille découpée dans un format 21 cm x 25 cm, il est constaté que le tapis ne glisse pas sur un bureau constitué d'un panneau mélaminé standard et que donc les fonctions essentielles d'un tapis de souris sont obtenues.

### EXEMPLE 2 :

Un papier personnalisable par une impression jet d'encre est réalisé de la façon suivante :

Un papier servant de support, de grammage. 155 g/m², de lissé Bekk 7 secondes sur la face dite recto, texturé avec des feutres marqueurs sur la machine à papier pour produire un léger relief et de lissé Bekk 40 secondes sur la face verso, est enduit hors machine à papier dans une coucheuse de type lame d'air disposant de deux postes d'enduction sur ses deux faces et en un seul passage avec deux couches différentes.

La face verso, la plus lisse, reçoit une dépose de 17 g/m² en poids sec d'une formulation contenant en pourcentage : 70% d'un liant styrène-butadiène carboxylé, 20% de microbilles déformables EXPANCEL® 820 DU 40 de 40 µm de diamètre moyen de la société AKZO NOBEL, 10% d'un agent épaississant : de la carboxymethylcellulose de moyenne viscosité.

La température de séchage de cette couche est spécifiquement adaptée pour l'expansion maximum des billes de manière à ce que la rugosité finale de cette face du papier soit très importante et que sous l'action de la pression la surface soit déformable pour atteindre l'effet non glissant recherché. La température de surface atteinte par le papier en sécherie est de 110°C.

La face recto, la plus rugueuse, reçoit une dépose de 8 g/m² en poids sec d'une formulation contenant en pourcentage : 60% de silice, 25% de PVA , 5% d'un agent cationique pour la floculation des encres, 5% d'additifs divers comprenant des agents pour la dispersion de la silice, des agents antimousses, des agents d'étalement, des insolubilisants des liants et 5% de microbilles COATHYLENE® HA 2578 de la société DUPONT dont le diamètre moyen de particules est de l'ordre de 17 µm.

Le papier ainsi traité a un grammage final de 180 g/m². Après introduction de plusieurs feuilles de ce papier dans la cassette d'alimentation des imprimantes jet d'encre et des essais d'impressions il est constaté que le passage s'effectue sans départ multiple de feuilles et donc sans bourrage malgré la présence de la couche anti-glisse au verso de la face imprimée. L'impression en jet d'encre sur une imprimante EPSON STYLUS PHOTO 750 avec un réglage adapté pour les papiers couchés de qualité photographique conduit à d'aussi bons résultats que sur des papiers couchés habituellement rencontrés sur le marché. L'emploi pendant une longue période de ce papier en tant que tapis de souris permet de constater une amélioration de la résistance de l'impression vis à vis de l'usure provoquée par les patins de la souris comparativement à la longévité d'une impression sur un papier couché standard et par rapport à un papier couché ne contenant pas les microbilles.

Le papier ainsi obtenu possède une image de haute qualité, un toucher très doux du fait de sa légère texturation de surface, le glissement de la souris d'ordinateur s'effectue sans problème, le pointage étant très précis ; lors de l'emploi en tant que tapis de souris d'une feuille découpée dans un format 21 cm x 25 cm, il est constaté que le tapis ne glisse pas sur un bureau constitué d'un panneau mélaminé standard.

### EXEMPLE 3 :

Un papier personnalisable par une impression jet d'encre et utilisable notamment comme tapis de souris d'ordinateur est réalisé de la façon suivante :

Un papier servant de support, de grammage 140 g/m², de lissé Bekk 30 secondes sur la face dite recto et 60 secondes sur la face verso, fabriqué avec une composition fibreuse contenant 50% de fibres cellulosiques et 50% de fibres de linters de coton, est enduit hors machine à papier dans une coucheuse de type lame d'air disposant de deux postes d'enduction sur ses deux faces et en un seul passage avec deux couches différentes.

La face verso, la plus lisse, reçoit une dépose de 12 g/m² en poids sec d'une formulation contenant en pourcentage : 85 % d'un liant styrène-butadiène carboxylé de température de transition vitreuse - 2°C, 10% de microbilles déformables EXPANCEL® 820 DU 40 de 40 µm de diamètre moyen de la société AKZO NOBEL et 5% d'un agent épaississant : du PVA de haute viscosité.

La température de séchage de cette couche est spécifiquement adaptée pour l'expansion maximum des billes de manière à ce que la rugosité finale de cette face du papier soit très importante et que sous l'action de la pression la surface soit déformable pour atteindre l'effet non glissant recherché. La température de surface atteinte par le papier en sécherie est de 110°C.

La face recto, la plus rugueuse, reçoit une dépose de 8 g/m² en poids sec d'une formulation contenant en pourcentage : 55% de silice, 25% de PVA , 5% d'un agent cationique pour la floculation des encres, 5% d'additifs divers comprenant des agents pour la dispersion de la silice, des agents antimousses, des agents d'étalement et des insolubilisants des liants, 5% de microbilles de polyuréthane DAIPLACOAT® RHC 530 CLEAR de la société DAINICHISEIKA COLOR & CHEMICALS dont le diamètre moyen de particules est de l'ordre de 12 à 17 µm et 5% de pigment MARTIFIN® OL 107 de la société MARTINSWERK.

Après les couchages et le développement de l'expansion des microbilles du couchage verso la face la plus lisse du support devient la plus rugueuse et la face recto la plus lisse ; en final le tapis de souris est globalement très rugueux sur ses deux faces mais une différence importante existe entre la face à imprimer et l'autre. Du fait de la couche jet d'encre définie précédemment le toucher de la surface est beaucoup plus doux que celui d'un papier jet d'encre habituel.

Le papier ainsi traité a un grammage final de 160 g/m². Après introduction de plusieurs feuilles de ce papier dans la cassette d'alimentation des imprimantes jet d'encre et des essais d'impressions, il est constaté que le passage s'effectue sans départ multiple de feuilles et donc sans bourrage malgré la présence de la couche anti-glisse au verso de la face imprimée. L'impression en jet d'encre sur une imprimante EPSON STYLUS PHOTO 750 avec un réglage adapté pour les papiers couchés de qualité photographique conduit à d'aussi bons résultats que sur des papiers couchés habituellement rencontrés sur le marché. L'emploi pendant une longue période de ce papier comme tapis de souris permet de constater une amélioration de la résistance de l'impression vis à vis de l'usure provoquée par les patins de la souris comparativement à la longévité d'une impression sur un papier couché standard et par rapport à un papier couché ne contenant pas les microbilles.

Le papier ainsi obtenu possède une image de haute qualité, un toucher très doux, le glissement de la souris d'ordinateur s'effectue sans problème, le pointage étant très précis ; lors de l'emploi en tant que tapis de souris d'une feuille découpée dans un format 21 cm x 25 cm, il est constaté que le tapis ne glisse pas sur un bureau constitué d'un panneau mélaminé standard et que donc les fonctions essentielles d'un tapis de souris sont obtenues.

## Revendications

1. Papier couché (**I**) constitué d'un support papier (**1**) couché différemment sur ses deux faces **(1a, 1b)** opposées, et **caractérisé en ce que** :
- la face recto **(1a)** du support **(1)** est associée à une couche **(2)** imprimable par jet d'encre avec une qualité photographique, et
- sa face verso **(1b)** est associée à une couche (**3**) non-adhésive, à fonction anti-glisse, comportant des microbilles déformables dispersées dans un liant.

2. Papier couché (**I**) selon la revendication 1 **caractérisé par le fait que** la couche (**3**) à fonction anti-glisse comporte des microbilles thermoplastiques déformables de diamètre moyen inférieur ou égal à 100 µm, préférentiellement compris entre 10 et 80 µm.

3. Papier couché (**I**) selon la revendication 1 ou 2 **caractérisé par le fait que** la masse sèche déposée de la couche **(3)** à fonction anti-glisse sur la face verso **(1b)** du support papier est inférieure ou égale à 25 g/m² et plus particulièrement compris entre 7 et 15 g/m².

4. Papier couché **(I)** selon l'une des revendications 1 à 3 **caractérisé par le fait que** la couche (**2**) imprimable par jet d'encre contient des microbilles qui n'absorbent pas les encres, ces microbilles étant de préférence rigides et présentent de façon avantageuse un diamètre moyen compris entre 10 et 50 µm.

5. Papier couché (**I**) selon l'une des revendications 1 à 4 **caractérisé par le fait que** la couche (**2**) imprimable par jet d'encre contient des additifs qui rendent la surface douce au toucher.

6. Papier couché (**I**) selon l'une des revendications précédentes **caractérisé par le fait que** la couche (**2**) imprimable par jet d'encre contient des additifs qui améliorent la résistance à l'abrasion et à l'usure du papier imprimé en jet d'encre lors de son utilisation.

7. Papier couché **(I)** selon l'une des revendications précédentes **caractérisé par le fait que** la masse sèche déposée de la couche (**2**) imprimable par jet d'encre sur la face verso **(1a)** du support papier est inférieure ou égale à 20 g/m² et de préférence comprise entre 4 et 10 g/m².

8. Papier couché **(I)** selon l'une des revendications précédentes **caractérisé par le fait qu'**il présente un grammage inférieur ou égal à 400g/m², de préférence compris entre 80 et 250 g/m².

9. Procédé de fabrication d'un papier couché **(I)** selon l'une des revendications précédentes comprenant les étapes suivantes :
a) on couche sur la face recto **(1a)** du support **(1)** une couche (**2**) imprimable par jet d'encre avec une qualité photographique, et
b) on couche sur la face verso **(1b)** du support **(1)** une couche **(3)** non-adhésive, à fonction anti-glisse, comportant des microbilles déformables dispersées dans un liant.

10. Procédé selon la revendication 9 **caractérisé par le fait que** les couchages de la couche (**2**) imprimable par jet d'encre et de la couche (**3**) à fonction anti-glisse sont réalisés en un seul passage dans une machine de couchage.

11. Procédé selon la revendication 9 ou 10 **caractérisé par le fait que** la face verso **(1b)** du support papier **(1)** utilisé présente un lissé mesuré suivant la méthode Bekk classiquement connue en papeterie, Norme AFNOR NF Q 03 012, d'au moins 20 secondes et de préférence de plus de 40 secondes.

12. Procédé selon l'une des revendications 9 à 11 **caractérisé par le fait que** la face recto **(1a)** du support papier **(1)** est plus rugueuse que sa face verso **(1b).**

13. Utilisation d'un papier couché **(I)** selon l'une des revendications 1 à 8 pour la réalisation de nappes, sets de tables, sous-mains.

14. Utilisation d'un papier couché (**I**) selon l'une des revendications 1 à 8 pour la réalisation de tapis de souris.

15. Tapis de souris réalisés à partir d'un papier couché (**I**) selon l'une des revendications 1 à 8.

16. Tapis de souris selon la revendication 15 obtenu après impression à l'aide d'une imprimante jet d'encre et éventuellement découpe d'un papier couché **(I)** selon l'une des revendications 1 à 8.
